# EUROPEAN PATENT APPLICATION

(11) **EP 1 684 050 A2**
(43) Date of publication of application: **26.07.2006**
(21) Application number: 06000602.0
(22) Date of filing: 12.01.2006
(51) Int. Cl.: G01C 21/36, G08G 1/0968, G08G 1/0969, G05D 1/02

(54) **Method and system for detecting position of moving body using mobile terminal**

(30) Priority: 20.01.2005 KR 2005005457
(71) Applicant: Samsung Electronics Co., Ltd., Suwon-si, Gyeonggi-Do (KR)
(72) Inventor: Chon, Hae-Don, Yeongtong-gu, Suwon-si, Gyeonggi-do (KR); Jung, Hee-Jae, Yeongtong-gu, Suwon-si, Gyeonggi-do (KR)
(74) Representative: Grünecker, Kinkeldey, Stockmair & Schwanhäusser Anwaltssozietät

(57) **Abstract**

Provided is a method and system for quickly and exactly detecting a position of a moving body by transmitting position information stored in the mobile terminal to a Telemetics terminal of a vehicle using a radio frequency identification (RFID) technology. The mobile terminal includes an RFID reader for reading position information from an RFID tag installed in a specific area in a contactless way and an RFID tag for transmitting the read position information to the Telemetics terminal of the vehicle. The mobile terminal including the RFID reader transmits position information to a position detection apparatus of a moving body using its own RFID tag. By doing this, the position detection apparatus of the moving body can receive position information from the mobile terminal, which has read the position information from the RFID tag on the road, without inputting a separate address by a user and use the received position information as position information for a destination input.

## Description

The present invention relates generally to a method and system for detecting a position of a moving body using a mobile terminal, and in particular, to a method and system by which the position of the moving body can be easily determined and obtained using the mobile terminal by adopting a radio frequency identification (RFID) technology.

A typical navigation system displays a current position of a navigation system equipped moving body calculated by using information received from the Global Positioning System (GPS) on a map displayed on its screen. The navigation system also provides various kinds of driving information to a driver by displaying an orientation of the moving body, a distance to a destination, a current speed of the moving body, a route set by the driver before driving, and an optimal route to the destination. The navigation system for determining a position of a moving body and providing an optimal route to a destination is equipped in moving bodies (for example, ships, airplanes, and vehicles). The navigation system receives a signal indicating latitude, longitude, and altitude from a plurality of satellites belonging to the GPS, calculates a current position of a moving body, and displays map information including the current position to a driver visually or informs the driver of the current position in an auditory manner.

To receive a route guidance service from the navigation system, a user inputs a current self-position and a destination. The current self-position is determined using a determination technique of the GPS, which is typically used in the navigation system, and a destination input is typically achieved using a voice recognition method in which the user inputs the destination using a microphone or a direct input method in which the user directly inputs the destination using predetermined key buttons. In particular, if the voice recognition method is not used, the user directly inputs the destination by selecting a desired position using point of interest (POI) information or inputting a full address of the destination.

As described above, in the prior art, when the user intends to input a destination using the POI to receive the route guidance service from the navigation system, the user cannot use the navigation system unless the destination desired by the user is registered in the POI. In addition, if an update of an entire database including the POI information is not quickly performed, the user cannot search for up-to-date POI, and even if POI near the destination is input, may not obtain an optimal route to the destination but only a route to a near position. Moreover, though the method of inputting a destination using an address can be used in countries such as the United States of America in which addresses are granted based on road names, use of the method of inputting a destination using an address is limited in countries such as Republic of Korea in which an address system is different from a road system. Furthermore, in the method of inputting a destination using an address, a button operation must be performed several times to input the full address.

Accordingly, it is the object of the present invention to provide a method and system for detecting a position of a moving body using a mobile terminal, by which position information can be easily determined, obtained, and used every time and every where using a radio frequency identification (RFID) technology so that information exchange between users, between a user and a navigation device, and between navigation devices can be easily performed when an exchange of position information such as route computation or a position based service is required.

This object is solved by the invention as claimed in the independent claims.

Preferred embodiments are defined in the dependent claims.

According to one aspect of the present invention, there is provided a system for detecting a position of a moving body using a mobile terminal, the system including the mobile terminal for providing information related to a position selected by a user; and a position detection apparatus for receiving the position-related information from the mobile terminal and detecting the position by matching the received position-related information to map data.

According to another aspect of the present invention, there is provided a method of detecting a position of a moving body using a mobile terminal, the method including determining whether there exists position-related information received from the mobile terminal; if there exists the received position-related information as a result of the determination, reading the position-related information; and detecting a position by matching position information obtained by the reading to map data.

According to another aspect of the present invention, there is provided a mobile terminal for detecting a position of a moving body, which uses a method including transmitting a valid frequency signal for reading position-related information recorded in a radio frequency identification (RFID) tag; sensing whether there exists a signal received from an RFID tag approaching within an effective frequency range in response to the transmission; and reading and storing position-related information from an RFID tag existing within the effective frequency range as a result of the sensing.

The above and other objects, features and advantages of the present invention will become more apparent from the following detailed description when taken in conjunction with the accompanying drawings in which:
FIG. 1 is a schematic diagram of a system for detecting a position of a moving body using a mobile terminal according to a preferred embodiment of the present invention;
FIG. 2 is an illustrative diagram of a data structure in which position-related information is stored according to a preferred embodiment of the present invention;
FIG. 3 is a schematic block diagram of a mobile terminal performing a function of providing position information according to a preferred embodiment of the present invention;
FIG. 4 is a block diagram of an RFID reader shown in FIGs. 3 and 5;
FIG. 5 is a schematic block diagram of a position detection apparatus of a moving body, which performs a route guidance function, according to a preferred embodiment of the present invention;
FIG. 6 is a block diagram of an RFID tag shown in FIG. 3;
FIG. 7 is a flowchart illustrating a control process of a mobile terminal when position information is received according to a preferred embodiment of the present invention;
FIG. 8 is a flowchart illustrating a process of transmitting position information stored in a mobile terminal to a position detection apparatus of a moving body according to a preferred embodiment of the present invention; and
FIG. 9 is a flowchart illustrating a process of receiving position information and performing a route search in a position detection apparatus of a moving body according to a preferred embodiment of the present invention.

Preferred embodiments of the present invention will be described herein below with reference to the accompanying drawings. In the drawings, the same or similar elements are denoted by the same reference numerals even though they are depicted in different drawings. In the following description, well-known functions or constructions are not described in detail since they would obscure the invention in unnecessary detail.

In the present invention, a method and system is provided for quickly and correctly detecting a position of a moving body by transmitting GPS position data or a tag ID stored in a mobile terminal to a position detection apparatus of the moving body using an RFID technology. To do this, the mobile terminal includes an RFID reader for reading GPS position data or tag IDs from RFID tags installed in specific areas in a contactless method and an RFID tag for providing position-related information to a position detection apparatus of a moving body such as a Telemetics terminal of a vehicle. The mobile terminal including the RFID reader provides position information such as GPS position data or a tag ID to a position detection apparatus of a moving body having an RFID reader using its own RFID tag. The GPS position data can also be provided through a short message service (SMS) or a wireless Internet. By doing this, the position detection apparatus of the moving body performs a route guidance service to an exact destination by receiving the GPS position data or the tag ID stored in the mobile terminal without a separate address input by a user.

In prior to description of the present invention, the RFID technology used in the present invention will now be schematically described.

The RFID technology using RFID tags can be typically called a wireless recognition technology, which is a field of automatic data collection technology, using necessary information by collecting or recording data using a radio frequency. The RFID technology is quickly rising as an application field of new frequency communication.

An RFID system is largely constructed of three elements, i.e., a transponder called an RFID tag, an RFID reader for reading the RFID tag, and a component for processing data, wherein the RFID tag includes an integrated circuit (IC) chip, i.e., a microprocessor, produced to fit various usages and demands and an antenna for receiving a signal emitted by the RFID reader. If the RFID tag is sensed within an effective frequency range of an antenna included in the RFID reader, the RFID tag receives a signal output from the RFID reader and transmits information stored in the RFID tag to the RFID reader.

The RFID reader includes an antenna for emitting or receiving a signal, e.g. real data, and a electronic circuit module for transmitting or receiving the signal to or from the RFID tag, wherein a microprocessor included in the RFID reader stores data included in the signal received from the RFID tag in a memory, which is a storage unit, by modifying the signal or verifying the data and, if necessary, transmits the stored data at a later time. Line of sight for a direct contact or a direct operation is unnecessary for the RFID reader to recognize information of the RFID tag since an electromagnetic field emitted by the RFID reader transmits through every substance except substances having a metal attribute. In other words, even if the RFID tag is hidden, the RFID reader can read information from the RFID tag.

As described above, in the RFID technology using RFID tags, the RFID tags are paired with an RFID reader, and information of each RFID tag can be recognized using the RFID reader. The RFID tags contain useful information of various kinds of facilities, e.g., traffic information and position information.

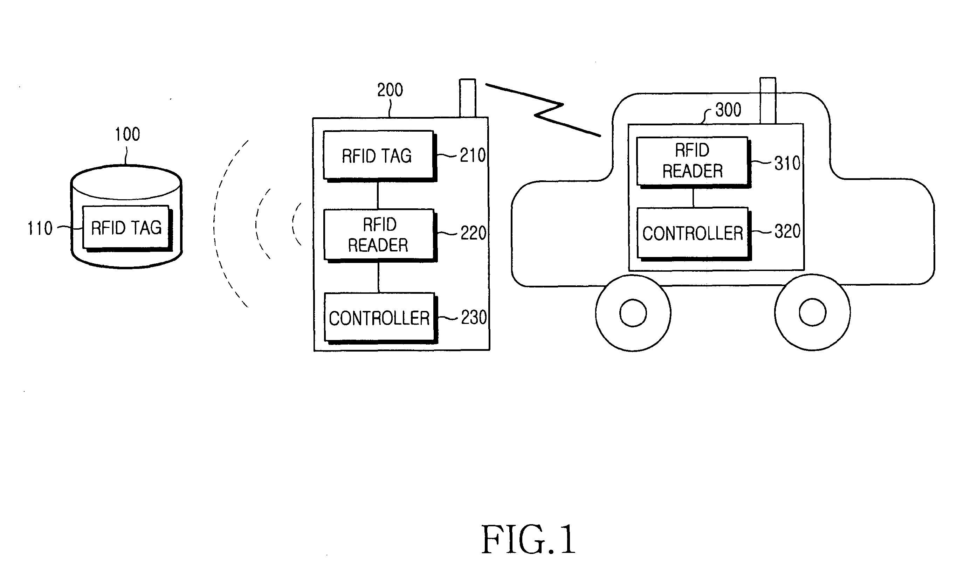

Components and operations of a system for detecting a position of a moving body using a mobile terminal according to a preferred embodiment of the present invention will now be described with reference to the schematic diagram of FIG 1. Referring to FIG. 1, a transponder 100 is installed at predetermined positions along the road at regular intervals and stores therein GPS position data of a corresponding position. The transponder 100 includes an RFID tag 110 storing therein at least one position-related piece of information among GPS position data needed for position and route guidance and a tag ID for identifying position information besides useful information of various kinds of facilities, e.g., traffic information and position information.

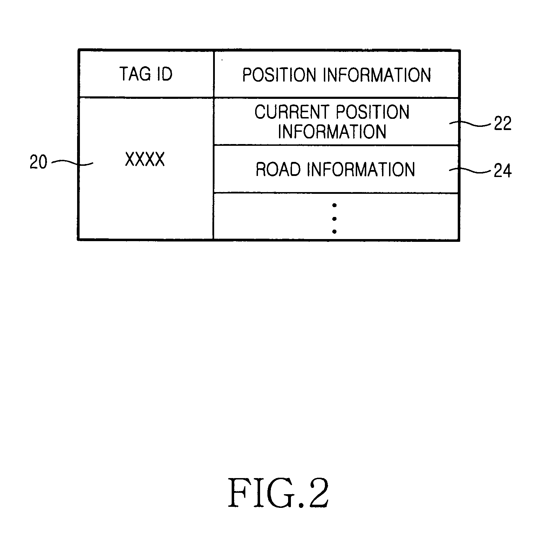

The information stored in the RFID tag 110 can be stored using a format illustrated in FIG 2, which is an illustrative diagram of a data structure in which the position-related information is stored according to a preferred embodiment of the present invention. The RFID tag 110 included in the transponder 100 installed at regular intervals stores therein an exact position corresponding to each RFID tag. The stored position information can include a unique tag ID 20, current position information 22, and road information 24. A unique value assigned to each transponder installed on the road is stored in the tag ID 20, and the road information 24 includes detailed information on the road on which a corresponding transponder is installed such as information indicating which lane on which road the corresponding transponder is installed since each transponder is installed at predetermined positions along the road at regular intervals. Exact coordinates information using the GPS satellites, i.e., real GPS position data, is stored in the current position information 22.

As described above, the transponder 100 stores position-related information in the RFID tag 110, and when the transponder 100 senses a signal within an effective frequency range, the transponder 100 transmits the position-related information, i.e., the GPS position data or its tag ID. That is, a process of transmitting an effective frequency signal to read the position information recorded in the RFID tag 110 and reading the position-related information from the RFID tag 110 approaching within the effective frequency range is performed. To do this, a mobile terminal 200 includes its own RFID tag 210, and an RFID reader 220, which drives the transponder 100 approaching within a predetermined distance and reads the position information recorded in the RFID tag 110 included in the transponder 100. The mobile terminal 200 also includes a controller 230 for processing the position-related information received from the RFID reader 220, providing information to the screen of the mobile terminal 200 according to a user's usage, and controlling each component.

A case where the mobile terminal 200 obtains the position information by receiving the position information from the RFID tag 110 approaching within a recognition distance using the RFID reader 220 when the mobile terminal 200 approaches the RFID tag 110 installed on the road has been described. That is, according to a preferred embodiment of the present invention, the position-related information stored in the mobile terminal 200 can be obtained from the RFID tag 110 installed on the road. In addition, according to another preferred embodiment of the present invention, the mobile terminal 200 can receive the position-related information such as the GPS position data using the SMS or the wireless Internet. The position-related information obtained using one of these methods is stored in the mobile terminal 200 as a database.

Then the mobile terminal 200 can transmit the position-related information obtained using one of these methods to a position detection apparatus 300 of a moving body. If any one of the databased position information is selected by the user, the mobile terminal 200 writes the selected position information into an RFID tag 210 using the RFID reader 220. When the RFID tag 210 in which the position information has been written approaches within a recognition distance of an RFID reader 310 included in the position detection apparatus 300 of the moving body in a contactless method, the position-related information stored in the RFID tag 210 is transmitted to the position detection apparatus 300 of the moving body. Then a controller 320 included in the position detection apparatus 300 of the moving body performs a route guidance service using the position-related information received from the RFID reader 310.

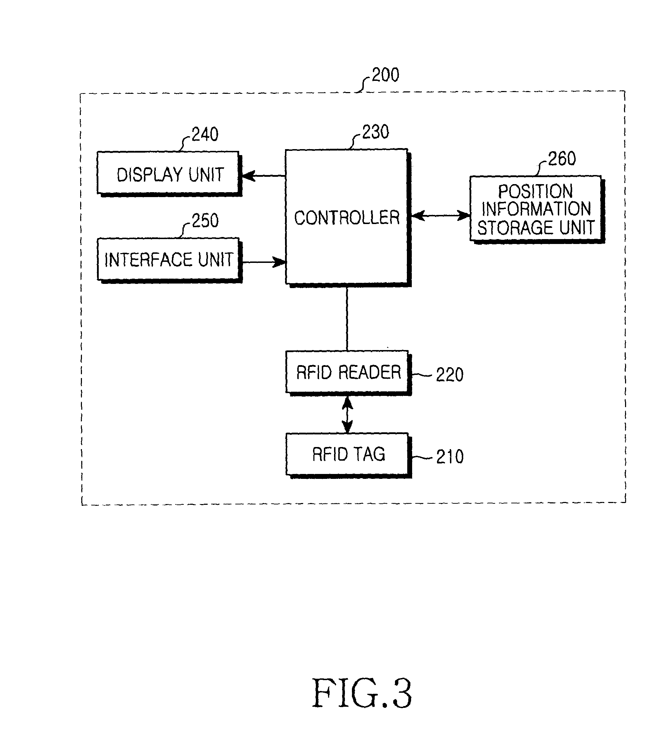

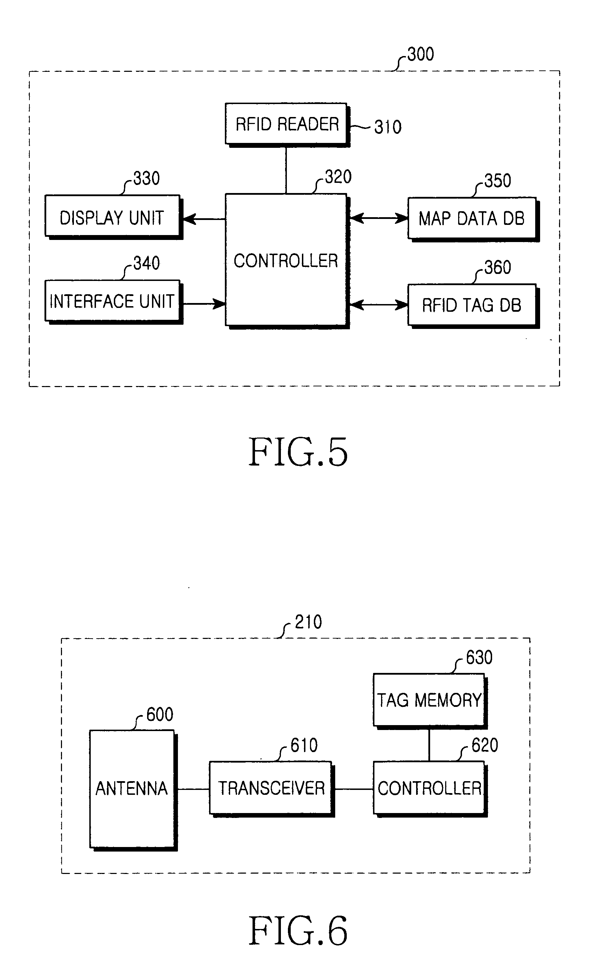

Configurations and operations of the mobile terminal 200 and the position detection apparatus 300 of the moving body will now be described in detail with reference to FIGs. 3 and 5. FIG. 3 is a schematic block diagram of the mobile terminal 200 performing a function of providing position information according to a preferred embodiment of the present invention. FIG. 5 is a schematic block diagram of the position detection apparatus 300 of the moving body, which performs a route guidance function, according to a preferred embodiment of the present invention.

As shown in FIG. 3, the mobile terminal 200 such as a cell-phone or a personal digital assistant (PDA) includes the RFID tag 210, the RFID reader 220, the controller 230, a display unit 240, an interface unit 250, and a position information storage unit 260. As shown in FIG 5, the position detection apparatus 300 of the moving body such as a Telemetics terminal of a vehicle includes the RFID reader 310, the controller 320, a display unit 330, an interface unit 340, a map data database (DB) 350, an RFID tag DB 360.

The controller 230 performs a general control operation of the mobile terminal according to a preferred embodiment of the present invention. In other words, the controller 230 performs an operation of reading and recognizing the position-related information provided from the RFID tag 110 on the road using the RFID reader 220 and storing the read and recognized position-related information in the position information storage unit 260. The controller 230 also performs an operation of reading position-related information according to a position information request input by the user, e.g., position information of a destination, from the position information storage unit 260.

Under a control of the controller 230, the display unit 240 receives key-input data input through the interface unit 250 and displays data corresponding to the key-input data, and when the user sets or drives a necessary function, the display unit 240 displays the set or driving state in a visual way. In particular, the display unit 240 displays a position information list stored in the position information storage unit 260 under a control of the controller 230 when the position information request is input by the user. By doing this, the user can select a desired position through the displayed position information list.
The interface unit 250, which can be a keypad, outputs an input signal corresponding to a user's input to the controller 230 and also outputs the position information request input by the user to the controller 230.

Under a control of the controller 230, the RFID reader 220 generates an RF signal to read a tag ID or GPS position data from each RFID tag 110 on the road, receives the tag ID or the GPS position data output from the RFID tag 110 in response to the RF signal, and transmits the received tag ID or GPS position data to the controller 230.

The controller 230 receives the tag ID or the GPS position data from the RFID reader 220 and stores the received tag ID or GPS position data in the position information storage unit 260 of the mobile terminal 200. Herein, when the controller 230 reads and recognizes the unique ID received from the RFID tag 110 through the RFID reader 220, the controller 230 can store the tag ID in the position information storage unit 260, or the controller can search for detailed position information corresponding to the unique tag ID and stores the searched corresponding position information and the tag ID together by mapping the tag ID to the position information.

The position information storage unit 260 may be a Read Only Memory (ROM), Random Access Memory (RAM), and voice memory to store a plurality of programs and information required for an operation control of the mobile terminal 200. In particular, in the position information storage unit 260 according to a preferred embodiment of the present invention, various kinds of position-related information, such as the tag ID provided from the RFID tag 110 on the road, the position information on a position at which the RFID tag 110 is installed, the POI, the GPS position data, i.e., GPS latitude and longitude, and position information provided through the SMS or the wireless Internet, is stored.

The controller 230 writes the position-related information stored in the position information storage unit 260 into the RFID tag 210 using the RFID reader 220 to provide the position-related information to the position detection apparatus 300 of the moving body. Thereafter, if the user's RFID tag 210 approaches the position detection apparatus 300 of the moving body, the position-related information stored in the RFID tag 210 is transmitted to the RFID reader 310 of the position detection apparatus 300 of the moving body.

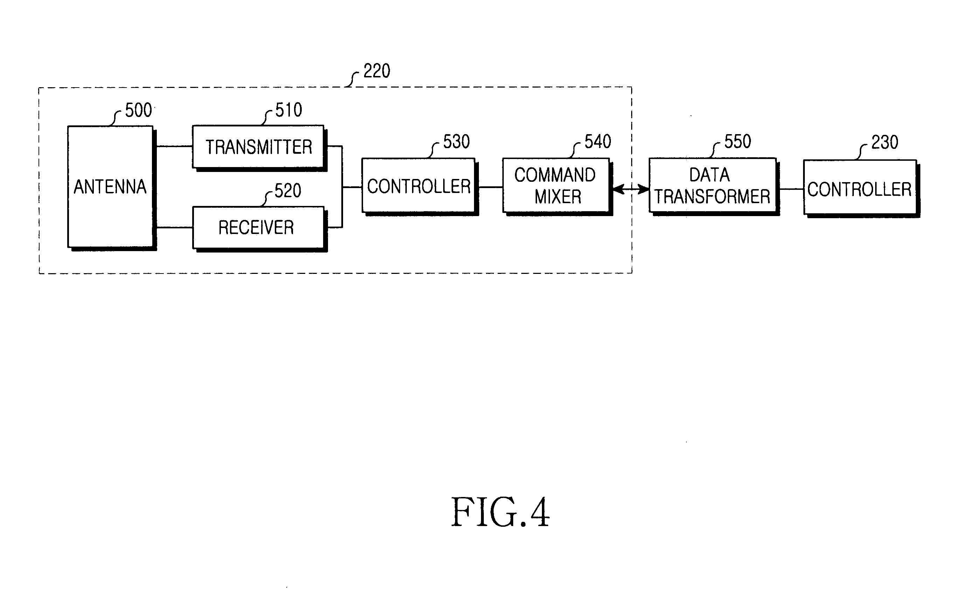

The RFID reader 220 will now be described in detail with reference to FIG. 4 which is a detailed block diagram of the RFID readers 220 or 310 in FIGS. 3 and 5. As shown in FIG. 4, the RFID reader 220 includes an antenna 500, a transmitter 510, a receiver 520, a controller 530, and a command mixer 540. The RFID reader 220 of the mobile terminal 200 has the same configuration as the RFID reader 310 of the position detection apparatus 300 of the moving body.

The antenna 500 emits a predetermined frequency as a signal pattern to the RFID tag 110 to receive information from the RFID tag 110 on the road, and when the RFID tag 110 enters the effective frequency range, the antenna 500 receives the information from the RFID tag 110 in a contactless way. The transmitter 510 transmits an effective frequency signal to the RFID tag 110 through the antenna 500, and the receiver 520 reads and recognizes the information of the RFID tag 110 received through the antenna 500. The controller 530 converts the information read and recognized by the receiver 520 to a digital signal using an analog-to-digital converter (ADC), transmits the converted digital signal to the controller 230 of the mobile terminal 200 to store the information in the position information storage unit 260 if necessary, and controls general functions of the transmitter 510 and the receiver 520.

In particular, communication between the controller 530 and the controller 230 of the mobile terminal 200 is performed using a data transformer 550. That is, if the controller 230 of the mobile terminal 200 transmits position information selected by the user in the position information list to the data transformer 550, the data transformer 550 transforms position-related information obtained from the position information storage unit 260 in response to the selection to position information having a format suitable for the RFID reader 220.

The command mixer 540 included in the RFID reader 220 generates a position information command by mixing the position information provided from the data transformer 550 and a write command to write the position information into the RFID tag 210 of the mobile terminal 200. The controller 530 converts the position information command to an analog signal using a digital-to-analog converter (DAC) and controls the transmitter 510 to transmit a signal having an RFID-related frequency and a predetermined power. Herein, since the frequency and power of the output signal is used by applying a different standard for each country (an international standard is not yet defined), it is preferable that an internal circuit structure of the mobile terminal 200 can be changed according to the frequency and power.

The transmitter 510 transmits an effective frequency signal to the RFID tag 210 through the antenna 500 under a control of the controller 530. By doing this, since the position-related information can be written in the RFID tag 210 of the mobile terminal 200 and transmitted to the RFID reader 310 of the position detection apparatus 300 of the moving body, the mobile terminal 200 can exactly transmit the detailed position information, which is not registered on a map, to the position detection apparatus 300 of the moving body.

The RFID tag 210 will now be described in detail with reference to the detailed block diagram of the RFID tag 210 illustrated in FIG. 6. As shown in FIG 6, the RFID tag 210 includes a tag memory 630 storing therein various kinds of position-related information equivalent to the various kinds of position information stored in the position information storage unit 260, an antenna 600 for receiving the position information command transmitted from the antenna 500 included in the RFID reader 220 and a frequency transmitted from an antenna included in the RFID reader 310, a controller 620 for converting the position information received through the antenna 600 to a digital signal using an ADC, detecting a signal of the position information, and storing the position information in the tag memory 630, which is a storage unit, and a transceiver 610 for transmitting the position information stored in the tag memory 630 through the antenna 600 when an effective frequency is sensed and receiving the position information command through the antenna 600.

When the position information command is received, if the command is a write command, the controller 620 controls the tag memory 630 to store position information, and if the command is a read command, the controller 620 controls the transceiver 610 and the tag memory 630 to transmit the position information stored in the tag memory 630 as a signal having the RFID-related frequency and a predetermined power through the antenna 600.

A configuration of the position detection apparatus 300 of the moving body such as a Telemetics terminal of a vehicle among components of a position detection system of a moving body using the mobile terminal 200 according to a preferred embodiment of the present invention has been described with reference to FIG 5. The position detection apparatus 300 of the moving body includes the RFID reader 310 for receiving position information from the RFID tag 210, the map data DB 350 to which position information can be referred, the RFID tag DB 360 storing therein tag IDs of RFID tags and GPS position data, the display unit 330 for displaying route guidance service images, the interface unit 340 for outputting a route guidance service request signal input by the user to the controller 320, the controller 320 for controlling them.
An operation of the position detection apparatus 300 of the moving body, which has the above configuration, will now be described.

When the user's RFID tag 210 of the mobile terminal 200 approaches the RFID reader 310 of the position detection apparatus 300 of the moving body, the RFID tag 210 senses a signal emitted from the RFID reader 310 and transmits the position-related information stored in the tag memory 630 to the RFID reader 310. The RFID reader 310 receives the position-related information transmitted from the RFID tag 210 of the mobile terminal 200 through its antenna. The received position information is transmitted to the controller 320 of the position detection apparatus 300 of the moving body and converted to a digital signal using an ADC. Herein, the RFID tag 210 of the mobile terminal 200 according to a preferred embodiment of the present invention transmits a tag ID as the position information to the RFID reader 310. The RFID tag 210 according to another preferred embodiment of the present invention can transmit position information indicating real position coordinates to the RFID reader 310.

When the tag ID is received from the RFID tag 210, the controller 320 loads stored position information corresponding to the received tag ID by referring to the RFID tag DB 360 and performs a departure and destination search. Likewise, in a case where the RFID tag DB 360 is included in the position detection apparatus 300 of the moving body, route computation is performed in the RFID reader 310 or a computer connected to the RFID reader 310. Unlike this case, in a case where the RFID tag DB 360 is included in a server, the tag ID is transmitted to the server through wireless communication and used as position information for route computation or a position-based service in the server. By doing this, the user can receive a route guidance service by inputting departure and destination through the position detection apparatus 300 of the moving body.

An operation of the system for detecting a position of a moving body using the mobile terminal 200 having the above configuration will now be described.

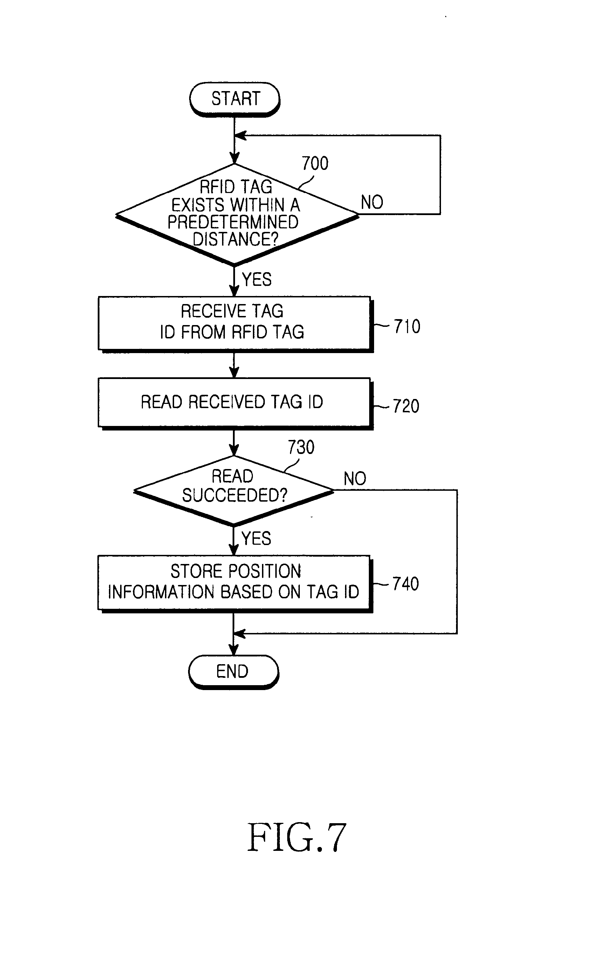

FIG. 7 is a flowchart illustrating a control process of the mobile terminal 200 when position information is received according to a preferred embodiment of the present invention. Referring to FIG. 7, to receive the position information in the mobile terminal 200, the RFID reader 220 transmits a predetermined frequency as a signal pattern to the RFID tag 110 and determines whether the RFID tag 110 exists within a predetermined distance, i.e., an effective frequency range, in step 700. As a result of the determination, if the RFID tag 110 exists within the effective frequency range, the RFID reader 220 receives a tag ID from the RFID tag 110 through the antenna 500 in step 710. The RFID reader 220 transmits the received tag ID to the receiver 520, and the receiver reads the received tag ID in step 720. The controller 530 determines whether an error exists in the tag ID in step 730, and if there is no error in the tag ID, the controller 530 stores the position information based on the tag ID in step 740. Though a case where the tag ID is received has been described as an example, the same process is performed for a case where GPS position data is received.

Besides the above method in which position information is stored in the position information storage unit 260 by receiving position-related information, e.g., a tag ID or GPS position data indicating current coordinates, from the RFID tag 110 approaching within a recognition distance of the RFID reader 220 of the mobile terminal 200, position-related information received using an SMS or the wireless Internet can be stored in the position information storage unit 260.

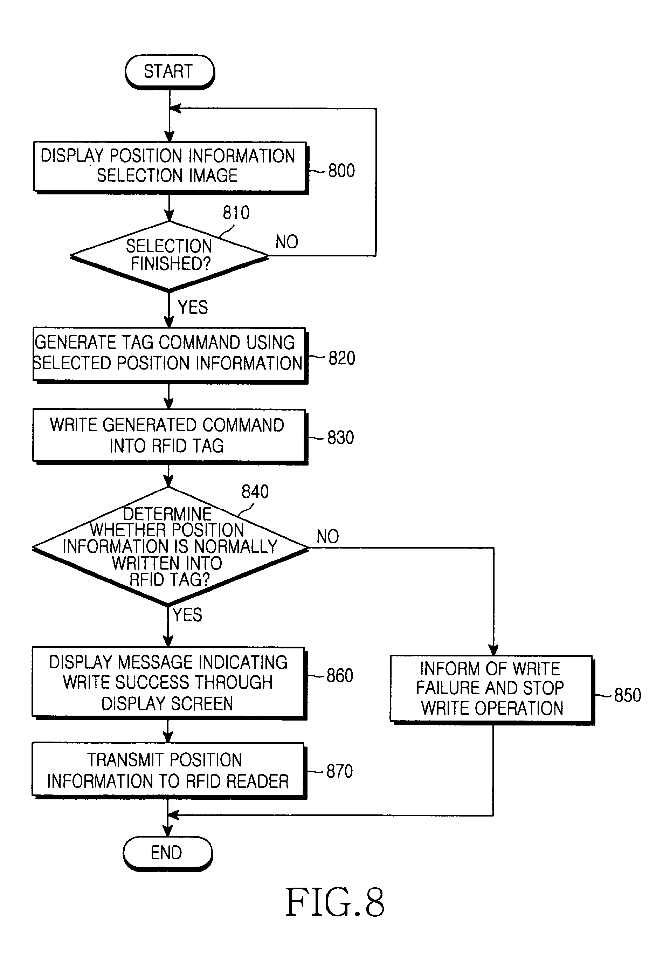

A process of transmitting position-related information stored in the position information storage unit 260 of the mobile terminal 200 to the position detection apparatus 300 of the moving body such as a Telemetics terminal of a vehicle will now be described. FIG. 8 is a flowchart illustrating a process of transmitting position information stored in the mobile terminal 200 to the position detection apparatus 300 of the moving body according to a preferred embodiment of the present invention.

Referring to FIG 8, in step 800, the controller 230 displays a position information selection image so that a user can select a desired point from a position information list. In step 810, the controller 230 determines whether the user has finished the selection, and if the selection is finished, in step 820, a tag command to write into the RFID tag 210 is generated by the command mixer 540 using the selected position information. In more detail, after the controller 230 performs data transformation to fit the RFID reader 220, in step 820, the controller 230 transmits the position information to the command mixer 540 to generate the tag command by mixing a write command and the position information transformed to write into the RFID tag 210. In step 830, the generated command is written into the RFID tag 210. In step 840, the controller 230 determines whether the position information is normally written into the RFID tag 210, and if the write has failed, in step 850, the controller 230 informs the user of the write failure and stops the write operation. If the write has normally succeeded, in step 860, the controller 230 displays a message indicating the write success through a display screen. When the user approaches the mobile terminal 200 within a recognition distance of the position detection apparatus 300 of the moving body such as a Telemetics terminal of a vehicle to transmit the position information written in the RFID tag 210, in step 870, the position information is transmitted from the RFID tag 210 to the RFID reader 310 of the position detection apparatus 300 of the moving body.

For the position detection apparatus 300 of the moving body to receive the position information of the mobile terminal 200, the RFID reader 310 of the position detection apparatus 300 of the moving body should be in a state where information of the RFID tag 210 can be received. If the RFID reader 310 cannot normally receive the information of the RFID tag 210, or if an error is included in the received information, the relevant position information should be received from the RFID tag 210 again.

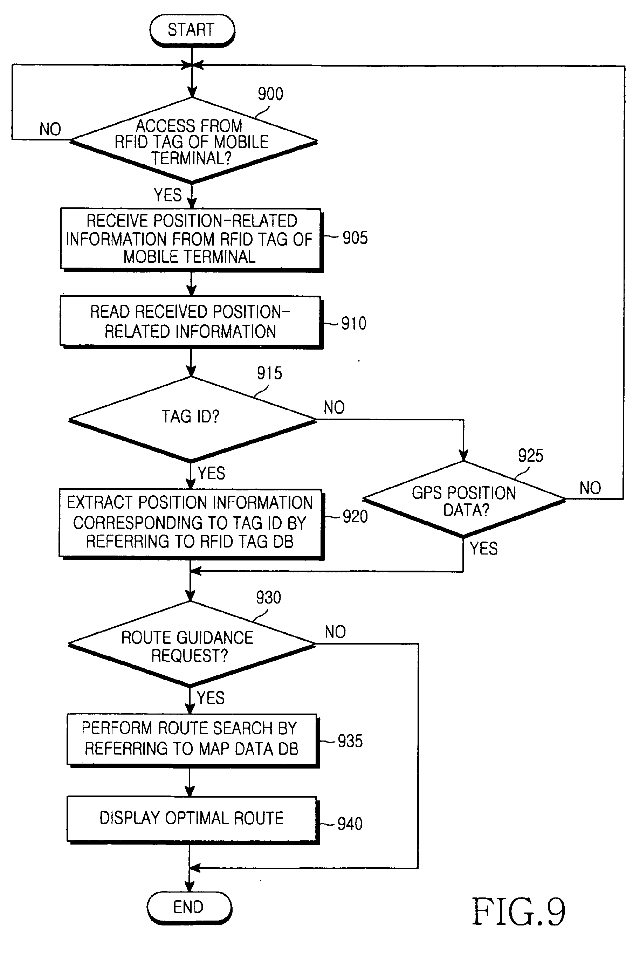

An operation of the position detection apparatus 300 of the moving body will now be described. FIG 9 is a flowchart illustrating a process of receiving position information and performing a route search in the position detection apparatus 300 of the moving body according to a preferred embodiment of the present invention.

Referring to FIG. 9, in step 900, the position detection apparatus 300 determines whether there exists an access from the RFID tag 210 of the mobile terminal 200. That is, the RFID reader 310 of the position detection apparatus 300 determines whether there is the RFID tag 210 approaching within a transmitting effective frequency range. As a result of the determination, if there is the RFID tag 210 approaching within the effective frequency range, the position detection apparatus 300 receives information from the RFID tag 210 of the mobile terminal 200 in step 905 and reads the received information in step 910. In step 915, the position detection apparatus 300 determines whether the read information is a tag ID. If the read information is a tag ID, in step 920, the position detection apparatus 300 extracts position information corresponding to the tag ID by referring to the RFID tag DB 360. The RFID tag DB 360 stores therein position information on a position at which the transponder 100 is installed for each tag ID.

If the read information is not a tag ID, in step 925, the position detection apparatus 300 determines whether the read information is GPS position data indicating real coordinates such as GPS latitude and longitude or POI. If the read information is real GPS position data, or if the position information corresponding to the tag ID is extracted, in step 930, the position detection apparatus 300 determines whether there is a route guidance request using the GPS position data or the position information. If there is a route guidance request by a user, in step 935, the position detection apparatus 300 performs a route search by performing map matching by referring to the map data DB 350 based on the GPS position data or the position information corresponding to the tag ID. In step 940, the position detection apparatus 300 displays an optimal route as a result of the route search.

As described above, according to embodiments of the present invention, when destination or position information is provided to route computation or a position-based service, a correct route guidance service can be provided by transmitting an exact address quickly and efficiently. For example, when a user gets into a taxi, the user does not have to explain his/her destination in detail, and a taxi driver can receive position information by approaching a mobile terminal carried by the user to a Telemetics terminal of the taxi and reach the exact destination. In addition, when the destination is transmitted to a navigation system of a driver or a vehicle, a method of communicating between an RFID reader and an RFID tag by approaching an RFID tag equipped mobile terminal to the RFID reader of the vehicle can be used more simply than an infrared or Bluetooth communication method.

While the invention has been shown and described with reference to a certain preferred embodiment thereof, it will be understood by those skilled in the art that various changes in form and details may be made therein without departing from the scope of the invention as defined by the appended claims.

## Claims

1. A system for detecting a position of a moving body using a mobile terminal, the system comprising:
the mobile terminal for providing information related to a position selected by a user; and
a position detection apparatus for receiving the position-related information from the mobile terminal and detecting the position by matching the received position-related information to map data.

2. The system of claim 1, wherein the position detection apparatus is located on the moving body and includes a radio frequency identification, RFID, reader for receiving the position-related information from an **RFID** tag of the mobile terminal.

3. The system of claim 1 or 2, wherein in an **RFID** tag installed on a road, at least one position-related information of GPS position data needed for position and route guidance and a tag ID to identify a position is stored.

4. The system of one of claims 1 to 3, wherein position-related information stored in the mobile terminal is received using one of an RFID tag installed in a specific area, a short message service, SMS, and a wireless Internet, and stored in a database.

5. The system of claim 4, wherein when one of the databased position-related information is selected, the mobile terminal writes the selected position-related information into its own **RFID** tag using **RFID** reader, and wherein the mobile terminal transmits the position-related information of the **RFID** tag by approaching the **RFID** tag within a recognition distance of the position detection apparatus of the moving body.

6. The system of one of claims 1 to 5, wherein the mobile terminal comprises:
a display unit for displaying a position information list so that a user can select a desired point when the user inputs a position information request;
an **RFID** reader for receiving position-related information by generating an RF signal to read the position-related information from an RFID tag;
a position information storage unit for storing therein the position-related information; and
a controller for reading, recognizing, and storing the position-related information provided from the **RFID** tag, reading position-related information corresponding to the position information request input by the user, and controlling the **RFID** reader to write the position-related information into the **RFID** tag.

7. The system of claim 6, wherein the position information storage unit stores therein at least one position-related information of a tag ID provided from the **RFID** tag, position information on a position at which a transponder including the **RFID** tag is installed, point of interest, POI, and GPS position data.

8. A method of detecting a position of a moving body using a mobile terminal, the method comprising the steps of:
determining whether there exists position-related information received from the mobile terminal;
if there exists the received position-related information as a result of the determination, reading the position-related information; and
detecting a position by matching the read position information to map data.

9. The method of claim 8, wherein the step of determining whether there exists position-related information received from the mobile terminal comprises the steps of:
transmitting to a radio frequency identification, **RFID**, tag of the mobile terminal a predetermined frequency for receiving information from the **RFID** tag;
determining whether there exists the **RFID** tag of the mobile terminal approaching within an effective frequency range in response to the transmission; and
if there exists the **RFID** tag of the mobile terminal approaching within the effective frequency range as a result of the determination, receiving position-related information from the **RFID** tag.

10. The method of claim 8 or 9, wherein the step of reading the position-related information comprises the steps of:
determining whether the received position-related information is a tag ID; and
if a tag ID is received as a result of the determination, extracting position information corresponding to the tag ID by referring to an **RFID** tag database.

11. The method of one of claims 8 to 10, further comprising the steps of:
determining whether the received position-related information is Global Positioning System, GPS, position data;
if the GPS position data is received as a result of the determination, sensing whether there exists a route guidance request using the GPS position data;
if there exists a route guidance request as a result of the sensing, mapping the GPS position data to map data.

12. A method for detecting a position of a moving body in a mobile terminal, a method comprising the steps of:
transmitting a valid frequency signal for reading position-related information recorded in a radio frequency identification, **RFID**, tag;
sensing whether there exists a signal received from an **RFID** tag approaching within an effective frequency range in response to the transmission; and
reading and storing position-related information from the **RFID** tag existing within the effective frequency range as a result of the sensing.

13. The method of claim 12, further comprising:
displaying an already stored position-related information list if a position information request is input by a user;
if a desired point is selected by the user during the display, writing the selected position-related information into its own **RFID** tag using an **RFID** reader;
transmitting the position-related information stored in its own **RFID** tag to a position detection apparatus of the moving body by approaching its own **RFID** tag within a recognition distance of the position detection apparatus of the moving body.

14. The method of claim 13, wherein the step of writing is performed according to a position information command generated by mixing a write command and the position-related information selected by the user.
